(19) Europäisches Patentamt
European Patent Office
Office européen des brevets

(11) EP 2 009 323 A1

(12) **EUROPEAN PATENT APPLICATION**
published in accordance with Art. 153(4) EPC

(43) Date of publication:
**31.12.2008 Bulletin 2009/01**

(21) Application number: **07739191.0**

(22) Date of filing: **20.03.2007**

(51) Int Cl.:
***F16G 5/06*** (2006.01) ***D02G 3/44*** (2006.01)
***F16G 5/20*** (2006.01)

(86) International application number:
**PCT/JP2007/055748**

(87) International publication number:
**WO 2007/114052 (11.10.2007 Gazette 2007/41)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **05.04.2006 JP 2006104215**

(71) Applicant: **Bando Chemical Industries, Ltd.**
**Kobe-shi,**
**Hyogo 652-0883 (JP)**

(72) Inventor: **OHNO, Kimichika**
**Kobe-shi, Hyogo 652-0883 (JP)**

(74) Representative: **Behnisch, Werner**
**Reinhard, Skuhra, Weise & Partner GbR**
**Patent- und Rechtsanwälte**
**Friedrichstrasse 31**
**80801 München (DE)**

(54) **CORE FOR TRANSMISSION BELT, AND TRANSMISSION BELT**

(57) There is provided a core wire for a transmission belt that is capable of exerting sufficient performance for use when it is used as a transmission belt and substantially controlling occurrence of noises. There is also provided a transmission belt that is capable of exerting sufficient performance for use and substantially controlling occurrence of noises.



Printed by Jouve, 75001 PARIS (FR)

## Description

### TECHNICAL FIELD

The present invention relates to a core wire for a transmission belt and a transmission belt.

### BACKGROUND ART

At present, power transmission from a drive source to accessories is achieved with the use of a transmission belt. However, in power transmission from the drive source to accessories, noises may occur caused by the transmission belt.

For example, in driving of the accessories of an automobile, often employed is a serpentine drive system in which an auto tensioner is used, and torque on the side of each of the accessories is driven by one V-ribbed belt. However, in the serpentine drive system, there may be a case in which torque on the driving side and the torque on the accessories side resonate with each other, so that oscillation of the auto tensioner significantly increases to lead to occurrence of noises such as rapping or tapping noises of a belt on the tension pulley of the auto tensioner.

On the other hand, proposed is an attempt to reduce the oscillation amount of the auto tensioner by making an apparent elastic modulus in the V-ribbed belt fall in the range of 19600 to 100000 N per one rib (see Patent Document 1). Patent Document 1 discloses use of aramid fiber, polyvinyl alcohol fiber or polyethylene naphthalate fiber in place of polyethylene terephthalate fiber that has been widely used heretofore as a material for core wires.

However, when polyvinyl alcohol fiber is used, it is necessary to consider a manufacturing method capable of completely shutting out vapor because the polyvinyl alcohol suffers hygrothermal aging by contact with vapor at the time of vulcanization, and it is found that stable mass production is difficult in the present situation. Furthermore, polyethylene naphthalate fiber and aromatic polyamide fiber are less adhesive compared to polyethylene terephthalate fiber and have drawbacks that a core wire may pop out when they undergo extreme bending repeatedly.

As described above, conventional transmission belts disadvantageously fail to have sufficient performance for use and to sufficiently control noises.

Patent Document 1: Japanese Unexamined Patent Publication No. 2001-248692

### DISCLOSURE OF THE INVENTION

#### Problem to be Solved by the Invention

The present invention was made in consideration of the aforementioned conventional drawback, and it is an object of the present invention to provide a core wire for a transmission belt that achieves, when it is used in the transmission belt, at least one of:

- imparting sufficient performance for use (for example, durability) to a transmission belt and substantially reducing an oscillation amount; and
- imparting sufficient performance for use (for example, durability) and substantially controlling occurrence of noises, when it is used as core wires of a V-ribbed belt or the like.

It is also an object of the present invention to provide a transmission belt that achieves at least one of:

- exerting sufficient performance for use (for example, durability) and substantially reducing an oscillation amount; and
- exerting sufficient performance for use (for example, durability) when it is used as a V-ribbed belt or the like and substantially controlling occurrence of noises.

Other objects of the present invention will be apparent from the description of the present specification.

#### Means for Solving the Problem

The present invention was made in consideration of the above problems, and relates to a core wire for a transmission belt characterized by that it contains polyketone fiber. Also, the present invention relates to a transmission belt characterized by that the core wire for the transmission belt is embedded.

Effect of the Invention

According to the core wire for a transmission belt of the present invention, there are provided excellent effects of achieves, when it is used in the transmission belt, at least one of:

imparting sufficient performance for use (for example, durability) to a transmission belt and substantially reducing an oscillation amount; and
imparting sufficient performance for use (for example, durability) and substantially controlling occurrence of noises, when it is used as core wires of a V-ribbed belt or the like.

Further, according to the transmission belt of the present invention, there are provided excellent effects of achieving at least one of:

exerting sufficient performance for use (for example, durability) and substantially reducing an oscillation amount; and
exerting sufficient performance for use (for example, durability) when it is used as a V-ribbed belt or the like and substantially controlling occurrence of noises.

BRIEF DESCRIPTION OF THE DRAWINGS

FIG. 1 is a traverse cross-sectional view of a V-ribbed belt which is one example of a transmission belt, representing a plane perpendicular to a longitudinal direction of the belt.
FIG. 2 is a schematic view of a multi-axial transmitter.
FIG. 3 is a schematic view of a multi-axial transmitter.
FIG. 4 is a model view showing a core wire and a monofilament. In the Figure, the broken line A represents a center line, the solid line B represents a center line of a minimum twisting unit. In the Figure, the bold line in the longitudinal direction represents a core wire.

DESCRIPTION OF REFERENCE NUMERALS

1 top face canvas layer
2 core wire
3 adhesive rubber layer
4 rib rubber layer
5 rib
6 driving pulley
7 idler pulley
8 air-conditioner pulley
9 power-steering pulley
10 water-pump pulley
11 alternator pulley
12 auto tensioner
13 tension pulley
14 driven pulley

BEST MODE FOR CARRYING OUT THE INVENTION

In one aspect, the present invention relates to a core wire for a transmission belt containing polyketone fiber.
A principal feature of the core wire for the transmission belt of the present invention is containing polyketone fiber. Therefore, the core wire for the transmission belt of the present invention can substantially suppress occurrence of abnormal noises due to resonance caused by a transmission belt, when it is used as a core wire for the transmission belt, for example, a V-ribbed belt.
Also, since the core wire for the transmission belt of the present invention exhibits excellent adhesion to a rubber composition when it is used as a core wire for the transmission belt, such as a V-ribbed belt, even when the transmission belt undergoes extreme bending repeatedly, it is possible to substantially prevent the core wire for the

transmission belt from popping out. Further, according to the core wire for the transmission belt of the present invention, an excellent effect is exerted that influences on heat and humidity in vulcanization can be substantially suppressed because polyketone fiber is contained.

In the core wire for the transmission belt of the present invention, an inclination angle of monofilament of the polyketone fiber is preferably equal to or larger than 8 degrees, and more preferably equal to or larger than 12 degrees, with respect to a longitudinal axis of the polyketone fiber, from the viewpoint of bending fatigue resistance, and preferably equal to or smaller than 24 degrees, and more preferably equal to or smaller than 20 degrees from the viewpoint of elongation in running of the belt. According to such a core wire for the transmission belt, when it is used in production of a transmission belt, it makes the transmission belt exhibit excellent durability, and substantially suppresses occurrence of abnormal noises due to the transmission belt.

In the present description, the inclination angle ($\alpha$) represents an angle (degrees) made by a monofilament on the surface in the viewing direction of the core wire, at which the center line in the circumferential direction of belt of the core wire (broken line A in FIG. 4) and the center line of the minimum twisting unit (solid line B in FIG. 4) intersect with each other, and is an angle determined by an equation (1):

[Equation 1]

$$\alpha = \left| 90 - \left| \beta + 90 - \theta \right| \right| \qquad (1)$$

(in the equation (1), $\beta$ represents an angle of line in the diametrical direction of a primary twist yarn of the monofilament), and is determined by an equation (2):

[Equation 2]

$$\tan\beta = \frac{2102}{T_1\sqrt{D_1/S}} \qquad (2)$$

(in the equation (2), $T_1$ represents the number of times of primary twisting (times/10 cm), $D_1$ represents the total fineness of primary twist yarn (denier), and S represents the specific gravity), or an angle obtained by an equation (2') in other terms:

[Equation 3]

$$\tan\beta = \frac{2216}{T_1\sqrt{D_1/S}} \qquad (2')$$

(in the equation (2'), $T_1$ represents the number of times of primary twisting (times/10 cm), $D_1$ represents the total fineness of primary twist yarn (dtex), and S represents the specific gravity), and $\theta$ is an angle of primary twist yarn with respect to the diametrical line of a final twist yarn, and is an angle calculated by an equation (3):

[Equation 4]

$$\tan\theta = \frac{2102}{T_2\sqrt{D_2/S}} \qquad (3)$$

(in the equation (3), $T_2$ represents the number of times of primary twisting (times/10 cm), $D_2$ represents the total fineness of primary twist yarn (denier), and S represents the specific gravity), and in other terms, an angle calculated

by an equation (3'):

[Equation 5]

$$\tan\theta = \frac{2216}{T_2\sqrt{D_2/S}} \qquad (3')$$

(in the equation (3'), $T_2$ represents the number of times of primary twisting (times/10 cm), $D_2$ represents the total fineness of primary twist yarn (dtex), and S represents the specific gravity).

As is the case of the Lang's lay or the like, when the twisting direction is the same in the primary twisting and in the final twisting, in the equation (1), a value with a negative code added to the value β calculated by the equation (2) is used as β. Further, as is the case of a single twisting, when the core wire is formed by only one twisting, β = 0 and α is calculated from an equation (4):

[Equation 6]

$$\alpha = 90 - \theta \qquad (4)$$

(in the equation (4), θ is as defined above).

As the polyketone compound used for the polyketone fiber is not particularly limited, and for example, polyketones or the like in which 90% by weight or more of repeating units are made up of 1-oxotrimethylene unit represented by the equation (I):

[Chemical equation 1]

$$-\!\!\left[ CH_2CH_2CO \right]\!\!- \qquad (I)$$

In the present invention, polyketone made up of the 1-oxotrimethylene unit is preferred, for example, from the viewpoint of enabling the transmission belt to impart an ability to suppress abnormal noises, adhesion with a rubber composition, and an ability to exhibit sufficient hygrothermal aging suppressing function, when it is embedded as a core wire of the transmission belt. The expression "polyketone in which 90% by weight or more of repeating units are made up of 1-oxotrimethylene unit represented by the equation (I)" is also regarded as the one obtained by polymerization reaction so that the 1-oxotrimethylene monomers to be polymerized occupy 90% by weight or more in the raw material.

Preferably, the core wire for the transmission belt of the present invention is formed of a filament of the polyketone fiber.

As a production method of the polyketone fiber, specifically, various methods, such as a method including:

(A) the step of producing a filament formed of a polyketone compound, and
(B) the step of twisting the filament obtained in the above step (B), can be recited.

In the step (A), a monofilament formed of a polyketone compound may be produced by, for example, but is not limited to, a wet spinning method, a dry spinning method, and the like. The wet spinning method is a method involving discharging a polyketone compound-containing solution into a solidification bath through a spinning mouthpiece, drying and heat stretching the resultant product. The dry spinning method is a method involving discharging a polyketone compound-containing solution through a spinning mouthpiece, making a liquid component contained in a product discharged under a high temperature atmosphere volatilize, and conducting heat-stretching.

The polyketone compound-containing solution is a solution, obtained by dissolving the polyketone compound, for example, in a zinc halide compound-containing aqueous solution, hexafluoro isopropanol, m-cresol, resorcin, zinc aqueous solution, or the like.

The fiber length of the monofilament is desirably equal to or more than 10 mm, from the viewpoint of taking advantage of the strength possessed by the fiber. Further, the diameter of the monofilament is desirably from 3 μm to 40 μm from the viewpoint of easiness of spinning.

In the above step (B), the monofilament formed of the polyketone compound may be twisted by a combination of, for example, primary twisting and final twisting, to achieve the inclination angle within the above range.

In the present invention, the total fineness of the polyketone fiber may be within a range suited for the intended use. The total fineness is preferably equal to or more than 2000 dtex, and more preferably equal to or more than 3000 dtex, from the viewpoint of preventing breakage due to tension during belt running, and is preferably equal to or less than 12000 dtex, and more preferably equal to or less than 7000 dtex from the viewpoint of suppressing bending fatigue.

Specifically, the monofilament formed of polyketone formed of the 1-oxotrimethylene units may be obtained, for example, by polymerizing ethylene and carbon oxide in a diluting solvent in the presence of a radical initiator, to obtain polyketone in which equal to or more than 90% by weight of repeating units are 1-oxotrimethylene units, and then discharging a polyketone-containing solution obtained by dissolving the polyketone into a zinc halide compound-containing aqueous solution or the like into a solidification bath through a spinning mouthpiece, and drying and heat-stretching the obtained product (wet spinning method); or discharging the polyketone-containing solution through a spinning mouthpiece, making a liquid component contained in a product discharged under a high temperature atmosphere volatilize, conducting heat-stretching (dry spinning method), and the like. Then the monofilament is twisted so that the inclination angle is 8 to 24 degrees, with respect to the longitudinal axis, and thus the polyketone fiber is obtained.

In the above production method, (C) the step of dipping the polyketone fiber obtained in the step (B) in a solution containing an isocyanate compound or an epoxy compound (first treatment solution); (D) the step of drying the product obtained in the step (C) by passing the product through an oven adjusted at 180 °C to 280 °C for thirty seconds to two minutes; (E) the step of dipping the fiber obtained in the step (D) in an RFL [initial condensate of resorcin and formalin, and latex (for example, styrene-butadiene-vinylpyridine copolymer, chloroprene, and the like)] solution (second treatment solution); and (F) the step of drying by passing the product obtained in the step (E) through an oven adjusted at 180 °C to 280 °C for thirty seconds to two minutes may further be conducted. By conducting these steps, the obtained fiber exhibits excellent adhesion with respect to a rubber component or the like used in the transmission belt.

Examples of the isocyanate compound include, but are not limited to, 4,4'-diphenylmethane diisocyanate, p-phenyl diisocyanate, and polymethylene polyphenyl polyisocyanate. Examples of the epoxy compound include, but are not limited to, reaction products between polyols (for example, ethylene glycol, glycerin, pentaerythritol, sorbitol, and so on) and a polyalkylene glycol (for example, polyethylene glycol), and a halogen-containing epoxy compound (for example, epichlorohydrin); and reaction products between a polyvalent phenol compound [for example, bis(4-hydroxyphenyl) dimethylethane, phenol/formaldehyde resin, resorcin formaldehyde resin, and so on] and a halogen-containing epoxy compound. A solution containing the isocyanate compound or the epoxy compound may be obtained by dissolving the isocyanate compound or the epoxy compound, for example, in toluene.

In the above production method, an adhesion amount of the adhesive may be stabilized by repeating the step (E) twice or thrice.

In the above production method, from the viewpoint of sufficiently exerting adhesion of the core wire with respect to the rubber component or the like used in the transmission belt, and from the viewpoint of improving the tacking property with rubber in production of the belt, the step (F) of dipping the product obtained in the above step (E) in a solution containing an epoxy compound (epoxy resin), a phenol compound (phenol resin), or the like, or in a solution prepared by dissolving an adhesive rubber composition or one having a similar composition to the adhesive rubber composition in an appropriate solvent, followed by drying may also conducted.

In another aspect, the present invention relates to a transmission belt wherein the core wire for the transmission belt is embedded. The transmission belt of the present invention exerts sufficient performance for use (for example, durability) and can substantially lower the oscillation amount, and substantially suppress occurrence of noises, when it is used, for example, as a V-ribbed belt.

The transmission belt of the present invention may be used as a V-ribbed belt or the like, for example, in the case of using an auto tensioner.

As the transmission belt of the present invention, a V belt (for example, V-ribbed belt), a flat belt, a toothed belt, and the like are cited.

In the following, a transmission belt of the present invention will be described while taking a V-ribbed belt shown in FIG. 1 as an example. It is to be noted that the transmission belt of the present invention is not limited to this example.

The V-ribbed belt shown in FIG. 1 has an adhesive rubber layer 3 composed of a rubber composition, a top face canvas layer 1 disposed on the side of a top face of the adhesive rubber layer 3, and a rib rubber layer 4 disposed

on the side of a bottom face of the adhesive rubber layer 3. The top face canvas layer 1, the adhesive rubber layer 3, and the rib rubber layer 4 are integrally formed. On the side of the bottom face of the rib rubber layer 4, three rib parts 5 each extending in the longitudinal direction of the belt are formed at a predetermined pitch in the width direction of the belt. In a center region in the thickness direction of belt of the adhesive rubber layer 3, a plurality of core wires 2 arranged spirally to extend substantially in the longitudinal direction of the belt at a predetermined pitch in the width direction of the belt are embedded at constant intervals.

The adhesive rubber layer 3 is a layer formed of a rubber composition. The rubber composition contains, for example, chloroprene rubber, ethylene propylenediene rubber, hydrogenated nitrile rubber, alkylchlorosulfonated polyethylene, and the like, singly or as a mixture of two or more kinds. Such a rubber composition may appropriately contain a hereinafter described short fiber, reinforcing materials such as an inorganic filler, co-cross-linking agents, plasticizers, stabilizers, process aids, coloring agents as far as the object of the invention is not interrupted. Such an adhesive rubber layer 3 functions as a rubber layer that forms a belt main body part and holds the plural core wires 4.

The top face canvas layer 1 is provided by bonding woven fabric of nylon, cotton, or the like having subjected to an adhesion treatment by a rubber glue prepared by dissolving rubber in a solvent, on the top face of the belt, and partly participates in power transmission when the top face of the belt is wound so as to abut on a flat pulley

Like the above adhesive rubber layer 3, the rib rubber layer 4 is formed of a rubber composition containing chloroprene rubber, ethylene propylenediene rubber, hydrogenated nitrile rubber, alkylchlorosulfonated polyethylene, or the like. The rib rubber layer 4 may additionally contain a short fiber such as nylon fiber, aramid fiber, cotton, vinylon and the like so that they are oriented in the width direction of the belt, to improve the elastic modulus in the width direction of the belt. When the V-ribbed belt is wound on a pulley, the rib rubber layer 4 comes into abutment with the pulley and turns to be a main role for power transmission.

As for the adhesive rubber layer 3 and the top face canvas layer 1, it may be alternated by a layer having an equivalent composition as the rib rubber layer 4 and a corresponding thickness.

The V-ribbed belt shown in FIG. 1 may be produced, for example, in the following manner. To be more specific, a cylindrical die is covered with a canvas having subjected to adhesion treatment by rubber glue or the like, and a rubber sheet formed of a rubber composition is wound around the canvas. On such a rubber sheet, a core wire for a transmission belt of the present invention is wound. On the core wire for a transmission belt, a rubber sheet formed of a rubber composition is wound. As a result, a laminate is obtained. Then, the cylindrical die that holds the obtained cylindrical laminate is introduced into a vulcanization can. Thereafter, the laminate in the vulcanization can is vulcanized and integrated to obtain a rubber cylindrical body by heating it by pressurizing from the outside with high-pressure water vapor. The outer circumferential face of the obtained rubber cylindrical body is polished with a grind stone, to form a plurality of projecting strips extending in the circumferential direction and formed at a predetermined pitch in the cylindrical axial direction. Then, the rubber cylindrical body is cut into round slices at a predetermined width by the width for three projecting strips, to thereby obtain a transmission belt (V-ribbed belt).

In the following, the present invention will be described more specifically by way of examples and so on, however, the present invention is not limited to these examples.

## EXAMPLES

### (Example 1)

### (Production of core wire for transmission belt)

Two multifilaments of polyketone fiber bundled into 1100 dtex [available from ASAHI KASEI FIBERS CORPORATION, trade name: CYBERLON™, strength: 18 cN/dtex, degree of elongation: 6%, tensile elastic modulus: 335 cN/dtex] were drawn together, and primarily-twisted a predetermined number of times, and three resultant objects were bundled and finally-twisted, to obtain a core wire having a filament angle (inclination angle ($\alpha$)) of 5 degrees, and a total of 6600 dtex (1100 dtex/2 $\times$ 3). The obtained core wire was dipped in a 20 vol.% solution of isocyanate (available from Sumika Bayer Urethane Co., Ltd., Sumidur 44V20) in toluene, and pretreated by heating at 240 °C for forty seconds and drying. The core wire was dipped in a resorcin-formalin-latex (RFL) solution [resorcin (available from Sumitomo Chemical Co., Ltd.), formalin (available from KOEI CHEMICAL COMPANY, LIMITED), latex (CR latex) (available from SHOWA DENKO K.K.)], to conduct an adhesion treatment, and then heat-stretching fixing treatment was conducted.

The filament angle [inclination angle ($\alpha$)] is an angle (degrees) determined by the above equation (1).

(Example 2)

(Production of transmission belt)

A cylindrical die having a circumferential length of 1000 mm was covered with a cotton-polyester mix canvas to which an adhesion treatment with a RFL solution and a gluing treatment were conducted, in a bias manner. On the canvas, a sheet for first adhesion rubber formed of ethylene-propylene-diene rubber composition (available from Sumitomo Chemical Co., Ltd., trade name: Esprene 30) was wound. On the sheet for first adhesion rubber, the core wire obtained in Example 1 was wound.

Further, a sheet for second adhesion rubber formed of an ethylene-propylene-diene rubber composition was wound on the core wire. The cylindrical die obtained in this manner was put into a vulcanization can and vulcanized at an internal pressure of 588 kPa (6 $kgf/cm^2$), an external pressure of 883 kPa (9 $kgf/cm^2$), at 165 °C for 35 minutes, to obtain a rubber cylindrical body.

The outer circumferential face of the obtained rubber cylindrical body was polished with a grind stone, to thereby form a plurality of projecting strips (shape: PK shape) extending in the circumferential direction and formed at a predetermined pitch in the cylindrical axial direction. Then the rubber cylindrical body was cut into round slices at a predetermined width by the width for three projecting strips, to thereby obtain a transmission belt (V-ribbed belt). The obtained belt had a total belt thickness of 4.3 mm and a rib height of 2.0 mm.

(Comparative example 1)

In the same manner as in the above Example 1, a core wire of polyethylene terephthalate (1100 dtex/2 × 3) was fabricated. Using the obtained core wire, a transmission belt (V-ribbed belt) was obtained in the same manner as in the above Example 2.

(Comparative example 2)

In the same manner as in the above Example 1, a core wire of polyethylene naphthalate (1100 dtex/2 × 3) was fabricated. Using the obtained core wire, a transmission belt (V-ribbed belt) was obtained in the same manner as in the above Example 2.

(Test example 1)

Each of the V-ribbed belts in the above Example 1, Comparative example 1, and Comparative example 2 was used as a transmission belt of a multi-axial transmitter shown in FIG. 2, and the multi-axial transmitter was operated at room temperature (25 °C), and an oscillation amount of the auto tensioner 12 was measured. In FIG. 2, an alternator pulley 11 had a pulley diameter of 55 mm and a load of 1103 W, an air-conditioner pulley 8 had a pulley diameter of 95 mm and a load of 809 W, a power-steering pulley 9 had a pulley diameter of 115 mm and a load of 588 W, and a water-pump pulley 10 had a pulley diameter of 115 mm and a load of 37 W. Further, an idler pulley 7 had a pulley diameter of 90 mm, and a tension pulley 13 had a pulley diameter of 70 mm, an arm length of 75 mm, and a tension applied on the belt of 147N, and a driving pulley 6 had a pulley diameter of 120 mm, the number of rotation of 1000 rpm, and a driving axis rotation variation rate of ± 10%. The results are shown in Table 1.

[Table 1]

| | Example 1 | Comparative Example 1 | Comparative Example 2 |
|---|---|---|---|
| Material | Polyketone | Polyethylene terephthalate | Polyethylene naphthalate |
| Configuration | 1100dtex/2 × 3 | 1100dtex/2 × 3 | 1100dtex/2 × 3 |
| Filament angle (degrees) | 5 | 5 | 5 |
| Auto-tensioner oscillation amount (mm) | 12 | 28 | 22 |

As shown in Table 1, these results demonstrate that according to the V-ribbed belt of Example 1 in which a core wire formed of polyketone fiber is embedded, the oscillation amount of the auto tensioner is surprisingly reduced compared to each of the V-ribbed belts of Comparative examples 1 and 2 in which a core wire of polyethylene terephthalate

or a core wire of polyethylene naphthalate is embedded.

(Test example 2)

(1) Test No. 1

A core wire was obtained in the same operation as in Example 1 except that the core wire was a polyketone fiber of 1650 dtex/1 × 3, and the filament angle of 8 degrees [available from ASAHI KASEI FIBERS CORPORATION, trade name: CYBERLON™, strength: 18 cN/dtex, degree of elongation: 6%, tensile elastic modulus: 335 cN/dtex], and a V-ribbed belt was obtained by the same operation as in Example 2.

(2) Test No. 2

A core wire was obtained in the same operation as in Example 1 except that the core wire was a polyketone fiber of 1650 dtex/1 × 3, and the filament angle of 24 degrees [available from ASAHI KASEI FIBERS CORPORATION, trade name: CYBERLON™, strength: 18 cN/dtex, degree of elongation: 6%, tensile elastic modulus: 335 cN/dtex], and a V-ribbed belt was obtained by the same operation as in Example 2.

(3) Test No. 3

A core wire was obtained in the same operation as in Example 1 except that the core wire was a polyketone fiber of 1650 dtex/1 × 3, and the filament angle of 5 degrees [available from ASAHI KASEI FIBERS CORPORATION, trade name: CYBERLON™, strength: 18 cN/dtex, degree of elongation: 6%, tensile elastic modulus: 335 cN/dtex], and a V-ribbed belt was obtained by the same operation as in Example 2.

(4) Test No. 4

A core wire was obtained in the same operation as in Example 1 except that the core wire was a polyketone fiber of 1650 dtex/1 × 3, and the filament angle of 26 degrees [available from ASAHI KASEI FIBERS CORPORATION, trade name: CYBERLON™, strength: 18 cN/dtex, degree of elongation: 6%, tensile elastic modulus: 335 cN/dtex], and a V-ribbed belt was obtained by the same operation as in Example 2.

(5) Test No. 5

A V-ribbed belt was obtained by the same operation as in Example 2 except that the core wire was a core wire formed of polyethylene naphthalate of 1100 dtex/2 × 3 and the filament angle 5 degrees [trade name: Type Q904M, available from TEIJIN TECHNO PRODUCTS LIMITED].

(6) Test No. 6

A V-ribbed belt was obtained by the same operation as in Example 2 except that the core wire was a core wire formed of aromatic polyamide of 1650 dtex/1 × 3 and the filament angle 5 degrees [trade name: TECHNORA, available from TEIJIN TECHNO PRODUCTS LIMITED].

(7) Test No. 7

A V-ribbed belt was obtained by the same operation as in Example 2 except that the core wire was a core wire formed of polyvinyl alcohol of 1100 dtex/2 × 3 and the filament angle 5 degrees [trade name: KURALON, available from KURARAY CO., LTD.].

(8) Evaluation of V-ribbed belt

Each of the V-ribbed belts of the above Test Nos. 1 to 7 was attached to a belt driving system made up of the driving pulley 6 (diameter 120 mm), a driven pulley 14 (diameter 120 mm), an idler pulley 7 (diameter 70 mm), and a tension pulley 13 (diameter 55 mm) disposed between these pulleys, as shown in FIG. 3. The back face of the belt was brought into engagement with the idler pulley 7. Under an atmospheric temperature of 110 °C, the belt was caused to run by driving the driving pulley 6 at a rotation speed of 4900 rpm, with a load of the driven pulley 14 of 11.9 kW (16 horsepower), and an initial tension of the tension pulley 13 of 833 N (85 kgf). Tensile strength of the belt was measured

before and after running, and strength retention rate [strength after running/strength before running] was determined. The results are shown in Table 2.

[Table 2]

| | Test No. 1 | Test No. 2 | Test No. 3 | Test No. 4 | Test No. 5 | Test No. 6 | Test No. 7 |
|---|---|---|---|---|---|---|---|
| Material | Polyketone | Polyketone | Polyketone | Polyketone | Polyethylene naphthalene | Aromatic polyamide | Polyvinyl alcohol |
| Configuration | 1650dtex/1 × 3 | 1650dtex/1 × 3 | 1650dtex/1 × 3 | 1650dtex/1 × 3 | 1100dtex/2 × 3 | 1650dtex/1 × 3 | 1100dtex/2 × 3 |
| Filament Angle (degrees) | 8 | 24 | 5 | 26 | 5 | 5 | 5 |
| Running time (hour) | 300 | 300 | 82 | 300 | 300 | 300 | 16 |
| Running condition | Good | Good | Broken | Circumferential length largely varied | Peeling observed between core wire and rubber | Peeling observed between core wire and rubber | Broken |
| Strength retention rate (%) | 83 | 94 | 52 | 92 | 95 | 81 | 32 |

These results demonstrate that noises are suppressed in the case of the V-ribbed belt in which a core wire of polyketone fiber is embedded, and in particular, the V-ribbed belt in which a core wire of polyketone fiber having a filament angle of 8 to 24 degrees as is the cases of the V-ribbed belts of Test Nos. 1 and 2 are superior also in durability to a core wire of polyketone fiber having a filament angle of 5 degrees or 26 degrees.

INDUSTRIAL APPLICABILITY

According to the core wire for a transmission belt and the transmission belt, of the present invention, it is possible to suppress noises, and to provide means capable of retaining the condition suited for use such as a drive source, or accessories.

## Claims

1. A core wire for a transmission belt **characterized in that** it comprises polyketone fiber.

2. The core wire for a transmission belt according to claim 1, wherein an inclination angle of a monofilament of the polyketone fiber is 8 to 24 degrees with respect to the longitudinal axis of the core wire.

3. A transmission belt **characterized in that** it has the core wire for a transmission belt according to any one of claims 1 and 2 embedded therein.

4. The transmission belt according to claim 3, which is a V-ribbed belt.

FIG. 1

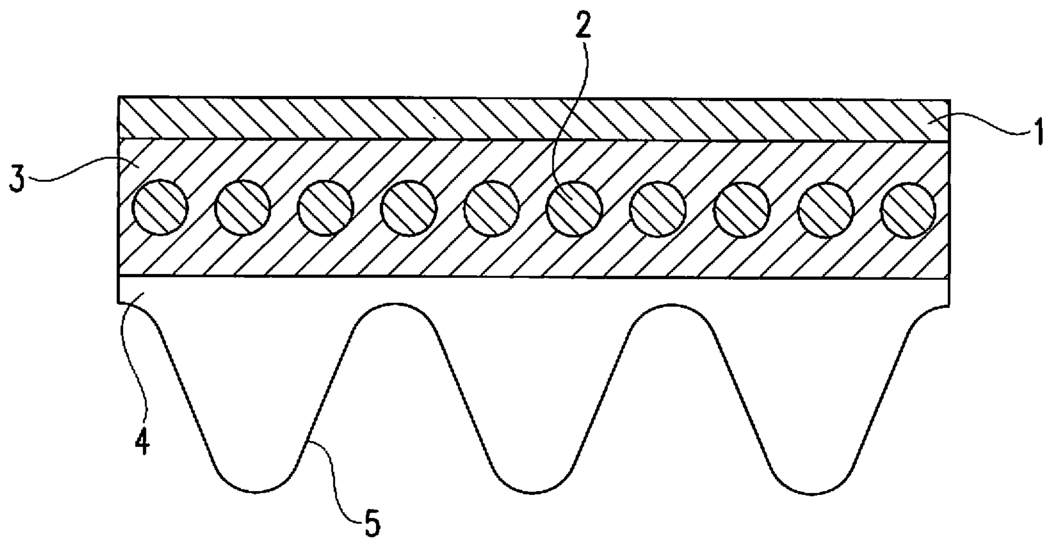

FIG. 2

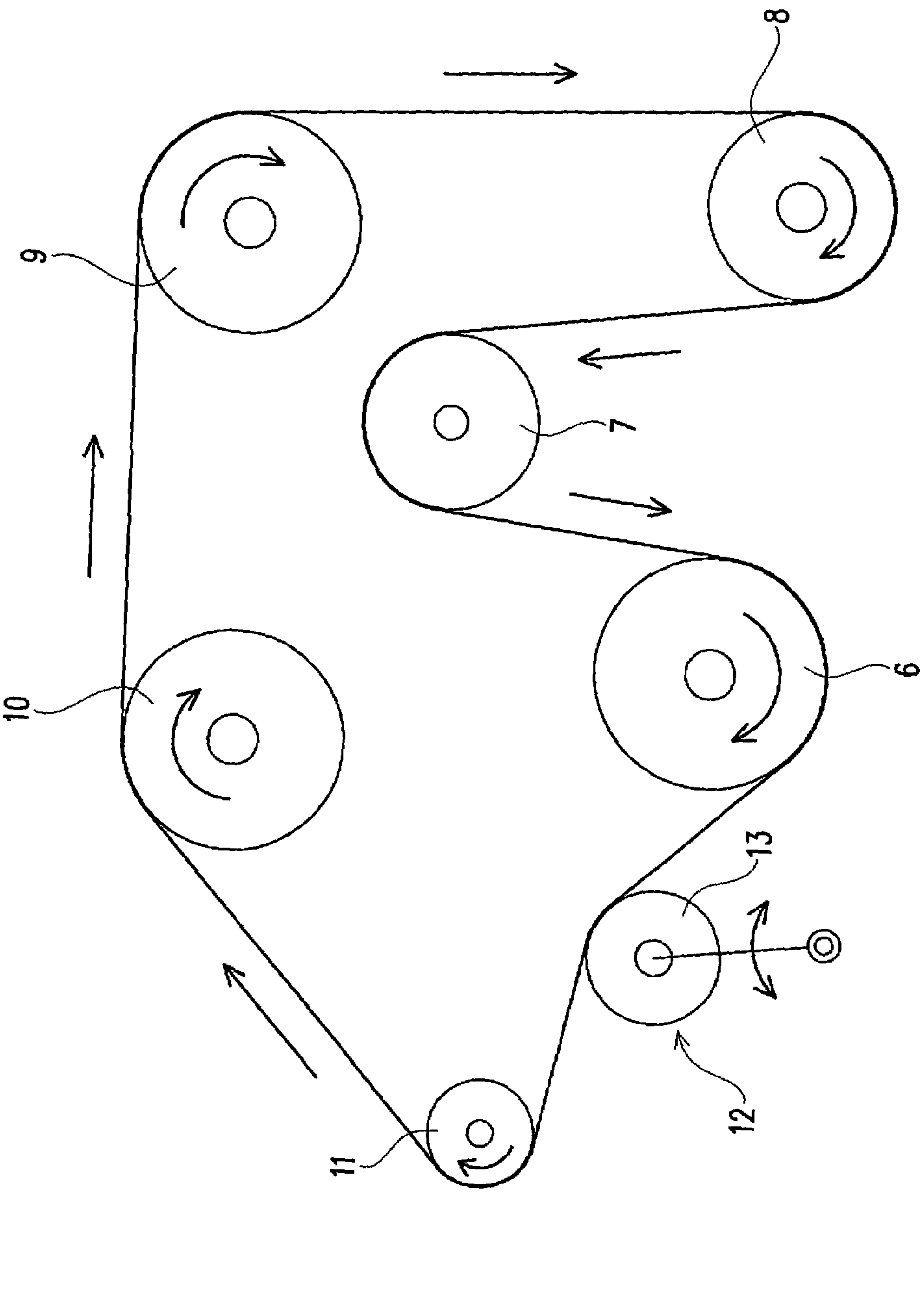

FIG. 3

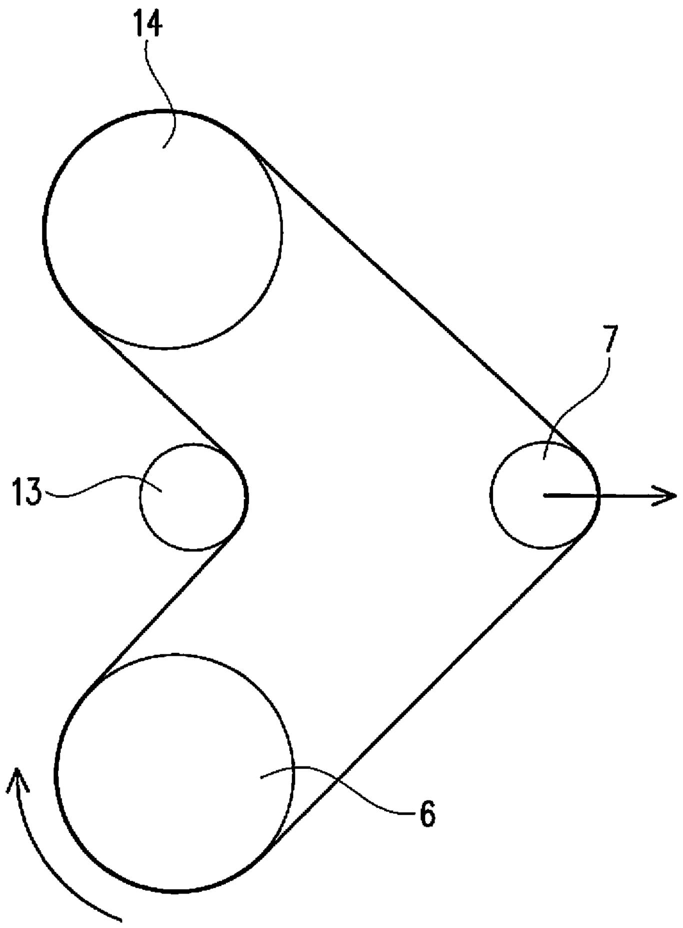

FIG. 4

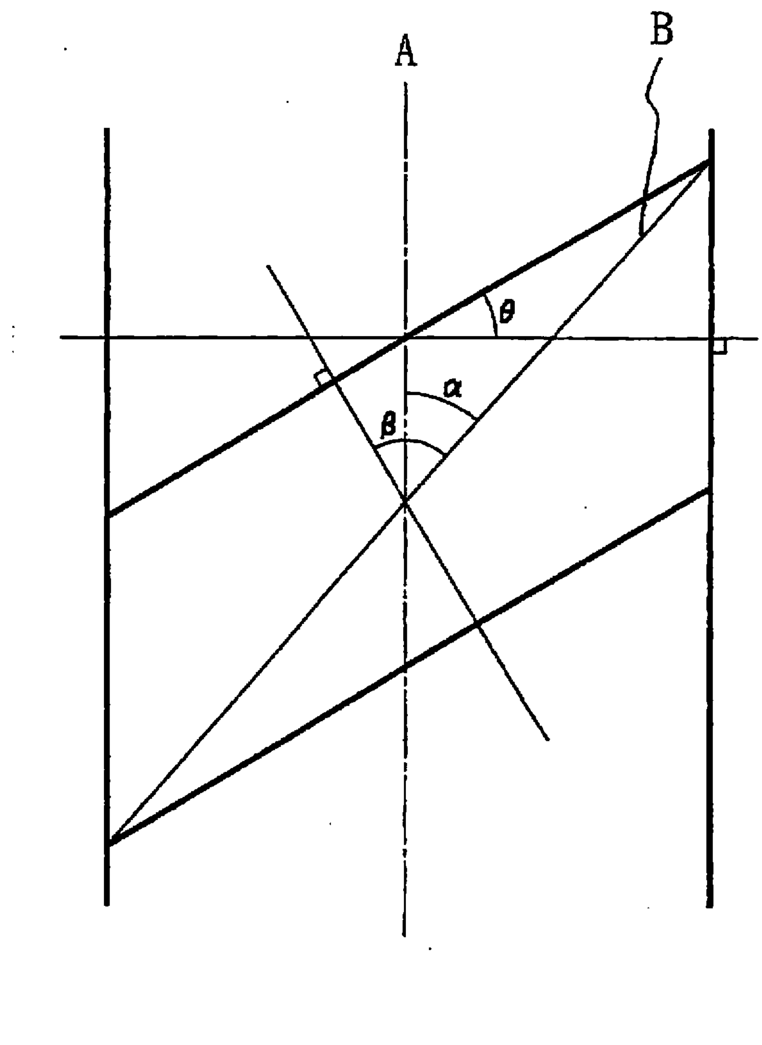

**INTERNATIONAL SEARCH REPORT**

International application No.
PCT/JP2007/055748

A. CLASSIFICATION OF SUBJECT MATTER
*F16G5/06*(2006.01)i, *D02G3/44*(2006.01)i, *F16G5/20*(2006.01)i

According to International Patent Classification (IPC) or to both national classification and IPC

B. FIELDS SEARCHED

Minimum documentation searched (classification system followed by classification symbols)
F16G5/06, D02G3/44, F16G5/20

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2000-345431 A (Asahi Chemical Industry Co., Ltd.),<br>12 December, 2000 (12.12.00),<br>Par. No. [0050]<br>(Family: none) | 1-3<br>4 |
| Y | JP 2001-248692 A (Bando Chemical Industries, Ltd.),<br>14 September, 2001 (14.09.01),<br>Par. No. [0024]; Fig. 3<br>(Family: none) | 4 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 April, 2007 (05.04.07) | 17 April, 2007 (17.04.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001248692 A